# EUROPÄISCHE PATENTSCHRIFT

(11) **EP 0 533 215 B1**
(45) Veröffentlichungstag und Bekanntmachung des Hinweises auf die Patenterteilung: **08.06.1994**
(21) Anmeldenummer: 92119475.9
(22) Anmeldetag: 13.11.1992
(51) Int. Cl.: G02B 5/30, G02F 1/00

(54) **Optische Elemente auf der Basis flüssigkristalliner helikaler Substanzen mit Reflexionsbanden linear polarisierten Lichtes und ein Verfahren zu ihrer Herstellung**
Optical elements made from helical liquid crystal substances with reflection bands of linear polarised light, and a method for their manufacture
Eléments optiques à base de substances à crystal liquide en forme d'hélice avec des bandes de réflection de la lumière polarisée linéairement et procédé pour leur fabrication

(30) Priorität: 18.11.1991 DE 4137943
(43) Veröffentlichungstag der Anmeldung: 24.03.1993
(73) Patentinhaber: Consortium für elektrochemische Industrie GmbH, D-81379 München (DE)
(72) Erfinder: Miller, Alfred, Dr., W-8033 Planegg (DE); Kreuzer, Franz-Heinrich, Dr., W-8033 Martinsried (DE); Leigeber, Horst, W-8024 Oberhaching (DE); Bräuchle, Christoph, Prof. Dr., W-8000 München 83 (DE); Petri, Andreas, W-8000 München 2 (DE)

(56) Entgegenhaltungen:
- EP-A- 0 066 137
- EP-A- 0 397 263
- EP-A- 0 407 830
- DE-A- 3 808 430
- US-A- 5 054 888

## Beschreibung

Die Erfindung betrifft optische Elemente auf der Basis flüssigkristalliner helikaler Substanzen mit Reflexionsbanden linear polarisierten Lichtes und ein Verfahren zu ihrer Herstellung.

Zwischen der festen kristallinen Phase und der fluiden Schmelze treten bei bestimmten Substanzen Zwischenphasen auf, die in struktureller und dynamischer Hinsicht Eigenschaften sowohl des geordneten kristallinen Zustands als auch des ungeordneten Schmelzzustandes in sich vereinigen. So sind diese Phasen zwar fluide, weisen aber z. B. optische Eigenschaften auf, die charakteristisch für die Mehrzahl kristalliner, aber auch teilkristalliner Stoffe sind: sie sind z. B. doppelbrechend. Man spricht dabei von Zwischenphasen (Mesophasen) oder auch flüssigkristallinen Phasen. Diese Phasen sind über eine Temperaturvariation zu erhalten - in diesem Fall spricht man von thermotropen Flüssigkristallen - oder auch in Lösung über Konzentrationsvariationen. Im folgenden sollen nur thermotrope Flüssigkristalle betrachtet werden.

Zur Charakterisierung der Existenzbereiche dieser Zwischenphasen gibt man im allgemeinen die z. B. kalorimetrisch oder mittels Polarisationsmikroskop bestimmten Übergangstemperaturen vom kristallinen Zustand in den flüssig-kristallinen Zustand (Glasübergangstemperatur) sowie vom flüssig-kristallinen Zustand in den der flüssigen Schmelze (Klärpunkt) an (Vergl. G. Allen & J. C. Bevington Eds., Comprehensive Polymer Science, Vol. 5, S 701-732, Pergamon Press 1989). Beim Vorliegen unterschiedlicher flüssigkristalliner Zustände wird der Satz der entsprechenden Übergangstemperaturen angegeben.

Die Struktur der flüssigkristallinen Phasen ist durch einen unterschiedlichen Fern- und Nahordnungsgrad der Moleküle gekennzeichnet. Man unterscheidet dabei nematische Phasen, smektische Phasen und cholesterische Phasen. Cholesterische Phasen werden auch als chiral-nematische Phasen oder twisted -nematische Phasen bezeichnet.

In der nematischen Phase sind die Molekülzentren ungeordnet verteilt, während die Längsachsen der Moleküle parallel zueinander orientiert sind. Dies ist abweichend zum Zustand in der fluiden Schmelze, wo die Moleküllängsachsen statistisch angeordnet sind.

Bei den smektischen Phasen tritt in Ergänzung zu der beschriebenen Orientierungsordnung der nematischen Phase eine regelmäßige Anordnung der Molekülschwerpunkte im Raum hinzu. Diese regelmäßige Anordnung kann entlang einer, aber auch entlang zweier oder sogar dreier voneinander unabhängiger räumlicher Achsen vorhanden sein. Dennoch sind diese Phasen fluide.

Bei der cholesterischen Phase sind Schichten von nematisch angeordneten Molekülen so übereinander angeordnet, daß sich eine kontinuierliche helikale Variation der Orientierungsrichtung der Moleküllängsachsen ergibt. Die Moleküle bilden also eine Helixstruktur mit der Periode p. Die cholesterische Phase hat somit eine helikale Struktur. Sie besitzt unter den flüssigkristallinen Phasen besondere Eigenschaften. (siehe z. B. Bergmann-Schaefer, Experimentalphysik, Band III: Optik, 7. Auflage (1987), S. 560 - 567 oder de Vries, Acta crystallogr., (1951) **4**, 219-226).

So ist bekannt, daß die cholesterische Phase von flüssigkristallinen Substanzen in einer makroskopischen Orientierung, bei der die Helixachsen zueinander parallel sowie senkrecht zur Oberfläche angeordnet sind, Licht, welches parallel zur Helixachse einfällt (Einfallswinkel 0°), in einem Wellenlängenbereich λ_{ref} reflektiert, der durch die Periode p, auch pitch genannt, die Brechungsindices und die Doppelbrechung des helikalen Materials festgelegt wird (de Vries, H.I., (1951), Acta crystallogr., 4, 219; Meier, G. in: Physical Properties of Liquid Crystals, ed.: Meier, Sackmann, Grabmeier, Springer-Verlag, (1975), 9-11).

Das reflektierte Licht ist zirkular polarisiert, wobei die Händigkeit des reflektierten Lichtes mit dem Drehsinn der Helixstruktur der cholesterischen Phase übereinstimmt (Jacobs. S.D., J. Fusion Energy, (186), 5(1), 65). Es treten jedoch keine Reflexionen bei λ_{ref}/2, λ_{ref}/3, usw. auf, wie sie bei anderen Systemen, die eine periodische Struktur aufweisen (z.B. Röntgenbeugung an Kristallen oder aufgedampfte Schichten für die Optik) als sog. Bragg Reflexionen bekannt sind. Bei Verkippen der Helixachse um den Winkel α verschiebt sich die Reflexionswellenlänge entsprechend dem Bragg-Gesetz zu λ_{ref} x cos (α) (Eberle, H.J., Miller, A., Kreuzer, F.- H., Liquid Crystals, (1989), 5(3), 907).

Weitere bekannte flüssigkristalline Phasen mit helikaler Struktur sind z. B. die S_{A}* bzw. die S_{C}* Phase. In der S_{A}* Phase liegen die Moleküle innerhalb der Schichten in einer der S_{A}-Phase analogen Anordnung vor. Von Schicht zu Schicht sind die Moleküle jedoch gegeneinander verdrillt. Man erhält somit eine Verdrehung der smektischen Schichten (J.W. Goodby et al., A New Molecular Ordering in Helical Liquid Crystals, J. Am. Chem. Soc. (1989) 111, 8119 - 8125; T.J. Bunning et al., Bilayer structures in cholesteric, cyclic-siloxane liquid crystals, LIQUID CRYSTALS (1991), 10(4), 445-456). Bei der S_{C}*-Phase, die z.B. bei den ferroelektrischen Flüssigkristalldisplays Anwendung findet, bildet der Tiltwinkel der Moleküle eine Helixstruktur aus. Auch in dieser Phase tritt bei geeigneter Periodizität der Helix eine Selektivreflexion von Licht auf. Diese Phasen haben die gleichen optischen Eigenschaften wie die cholesterische Phase, die oben beschrieben wurden.

Die deutsche Offenlegungsschrift DE 3 920 420 beschreibt ein Verfahren zur Herstellung optischer Komponenten auf der Basis polymerer Träger, die mindestens einen Farbstoff enthalten, unter Verwendung linear polarisierten Lichtes. Nach dem dort beschriebenen Verfahren wird ein System S, bestehend aus dem polymeren organischen Träger T und mindestens einem photoisomerisierbaren Farbstoff F durch Einstrahlen linear polarisierten Lichtes gezielt in Abhängigkeit von der Polarisationsrichtung und der Morphologie des organischen Trägers durch eine makroskopische, lichtinduzierte Strukturierung variiert.

Für obiges Verfahren geeignete polymere organische Träger T sind nicht helikale und nicht twisted nematische Polymere. Diese werden mit linear polarisiertem Licht bestrahlt und die Effekte werden in Transmission detektiert.

Bekannt sind optische Elemente, die linear polarisiertes Licht unter einem Winkel ungleich 0° zur Richtung des einfallenden Lichtes reflektieren (Dielektrische Schichten).

Bekannt ist ebenfalls, daß die Kombination einer Schicht aus einem cholesterischen Flüssigkristall und einer Viertelwellenplatte als Reflektor für linear polarisiertes Licht wirkt.

Die Erfindung betrifft optische Elemente wie in Anspruch 1 definiert, enthaltend nur eine optisch wirksame Komponente auf der Basis helikaler flüssigkristalliner Sustanzen, die dadurch gekennzeichnet sind, daß sie senkrecht zur Oberfläche eingestrahltes Licht parallel zur Einfallsrichtung des Bestrahlunglichtes linear polarisiert reflektieren.

Diese optischen Elemente sind dadurch erhältlich, daß man eine flüssigkristalline helikale Substanz mit linear polarisiertem Licht derart bestrahlt, daß diese Substanz anschließend so orientiert ist, daß sie bei Bestrahlen mindestens eine Reflexionsbande linear polarisierten Lichtes zeigt.

Unter helikalen Substanzen sind im Sinne der Erfindung Stoffe zu verstehen, die eine helikale Phase aufweisen, deren optische Eigenschaften denen einer cholesterischen Phase entsprechen.

Zum Einsatz in dem erfindungsgemäßen Verfahren gemäß Anspruch 1 eignen sich alle flüssigkristallinen helikalen Substanzen, die mindestens eine photoisomerisierbare Verbindung enthalten.

Geeignet sind sowohl niedermolekulare Flüssigkristalle als auch helikale flüssigkristalline Oligomere oder Polymere. Die mesogenen Reste können sowohl in der Hauptkette wie auch in der Seitenkette vorhanden sein. Bevorzugt geeignet sind flüssigkristalline helikale Organopolysiloxane. Lineare, cyclische oder verzweigte Organopolysiloxane sind gleichermaßen geeignet. Besonders bevorzugt geeignet sind Organopolysiloxane mit den mesogenen Resten in der Seitenkette. Diese Substanzen sind beispielsweise wie in der deutschen Offenlegungsschrift DE 3 808 430 oder in der US Patentschrift 4 410 570 beschrieben herstellbar. Bevorzugt werden solche flüssigkristallinen helikalen Substanzen ausgewählt, bei denen die Glasübergangstemperatur der Substanz höher ist als die Betriebstemperatur der erfindungsgemäßen optischen Komponente.

Die helikalen flüssigkristallinen Substanzen müssen in einer Schichtdicke von mindestens zwei Pitch Längen, bevorzugt 4 bis 200 Pitch Längen in den optischen Elementen eingesetzt werden.

Als photoisomerisierbare Verbindung geeignet sind beispielsweise alle aus der DE 3 920 420 und DE 3 808 430 bekannten photoisomerisierbaren Farbstoffe. Für die Auswahl geeigneter photoisomerisierbarer Farbstoffe gelten die in der DE 3 920 420 für die Auswahl des Farbstoffs F genannten Kriterien. So sind die geeigneten Farbstoffe vorzugsweise dadurch charakterisiert, daß sie unter Einwirkung von Licht bevorzugt einer Wellenlänge im Bereich ihrer Absorptionsbande eine Änderung der Molekülgeometrie erfahren. Die geeigneten Farbstoffe absorbieren bevorzugt im Bereich von 250 bis 2000 nm. Sie enthalten zweckmäßigerweise mindestens ein Strukturelement, welches bei Belichtung seine Geometrie ändert. Solche Strukturelemente können z. B. Mehrfachbindungen enthalten, insbesondere können sie die Möglichkeit der cis-trans-Isomerie aufweisen. Als Beispiele für Strukturelemente A, die Isomerie ermöglichen, seien genannt:

-N=N- -HC=CH-

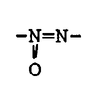

Insbesondere enthalten die Farbstoffe Gruppen, bei denen zwei aromatische Ringe oder Ringsysteme durch die genannten Strukturelemente A verbunden sind, wie z. B. 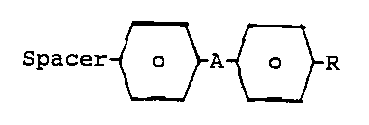
wobei R beispielsweise eine der folgenden Gruppen sein kann:

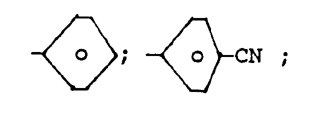

-(O)ₓ-(CH₂)_{y}-H ; -CN ;

wobei x=0, 1, bevorzugt 1 und y= 0,1, ... bis 10, bevorzugt 1 bis 5 ist.

Der Spacer dient der Anbindung an das Polymer und kann z.B. eine der folgenden Gruppen sein:

-(CH₂)ₘ-(O)ₙ- ;

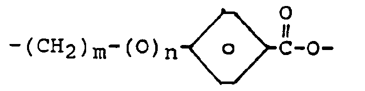

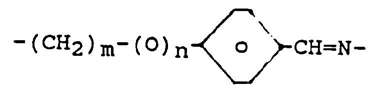

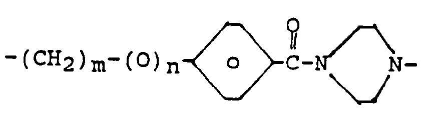

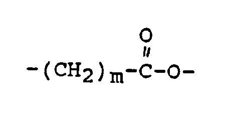

mit m=0, 1,... bis 10, bevorzugt m=3 bis 6; und n=0, 1.

Die Farbstoffe werden in einer Menge zwischen 1 und 50 Gew. % bezogen auf das Gewicht der fertigen Substanz, bevorzugt zwischen 5 und 40 Gew. %, den helikalen Flüssigkristallen zugemischt.

Falls erwünscht, werden die Farbstoffe in einer Menge zwischen 1 und 70 Gew.%, bevorzugt zwischen 5 und 50 Gew.% an die helikalen Flüssigkristalle kovalent gebunden. Dies kann beispielsweise nach dem in DE-A-38 08 430 oder auch DE-A-39 20 420 beschriebenen Verfahren durchgeführt werden. Die kovalente Bindung ist beispielsweise nötig, wenn der Farbstoff nicht mit den helikalen Flüssigkristallen mischbar ist.

Solcherart geeignete flüssigkristalline helikale Substanzen werden nach bekannten Verfahren orientiert. Sie können beispielsweise durch mechanische Behandlung, wie durch Scherung oder beim Auftragen durch Rakeln, durch Oberflächeneffekte, elektrische bzw. magnetische Felder ausgerichtet werden.

Die so orientierten flüssigkristallinen helikalen Substanzen werden mit linear polarisiertem Licht bestrahlt, dessen Einfallsrichtung mit der Helixachse der flüssigkristallinen helikalen Substanz einen Winkel zwischen 0° und 30°, bevorzugt zwischen 0° und 10° bildet.

Geeignet ist linear polarisiertes Licht bevorzugt einer Wellenlänge in dem Bereich, in dem die Absorption des photoisomerisierbaren Farbstoffs der flüssigkristallinen helikalen Substanz liegt. Besonders bevorzugt ist eine Wellenlänge in dem Bereich der Absorptionsbande der photoisomerisierbaren Verbindung der flüssigkristallinen helikalen Substanz. Das verwendete Licht kann monochromatisch oder polychromatisch, kohärent oder inkohärent sein.

Die Bestrahlung sollte mit einer Belichtungsenergie/Fläche von 0,5 J/cm² bis 200 J/cm², bevorzugt mit 1 bis 80 J/cm² vorgenommen werden. Die Bestrahlung sollte nicht mit einer größeren Belichtungsenergie/Fläche durchgeführt werden, da andernfalls alle Banden verschwinden und die Probe in eine quasi nematische Struktur übergeführt wird.

Es zeigte sich nun überraschend, daß derart bestrahlte flüssigkristalline helikale Substanzen vorteilhafte Eigenschaften aufweisen. Die erfindungsgemäßen Substanzen weisen bei Bestrahlen mit Licht neben der bekannten Reflexionsbande überraschend mindestens eine weitere Reflexionsbande auf. Meist treten 2, 3, oder mehr weitere Reflexionsbanden auf. Die neben der ursprünglichen Reflexionsbande mit der Reflexionswellenlänge der helikalen flüssigkristallinen Substanz auftretenden weiteren Reflexionsbanden haben eine Wellenlänge von ca. ½ , 1/3, ¼, usw. der Refexionswellenlänge der helikalen Substanz. Das in diesen neuen Reflexionsbanden reflektierte Licht ist überraschenderweise linear polarisiert. Völlig überraschend ist auch, daß das in der ursprünglichen Reflexionsbande für zirkular polarisiertes Licht reflektierte Licht nach der erfindungsgemäßen Bestrahlung linear polarisiert ist. Völlig überraschend ist weiterhin, daß bei Bestrahlung senkrecht zur Oberfläche der erfindungsgemäßen optischen Komponente das parallel zur Einfallsrichtung reflektierte Licht linear polarisiert ist. Das transmittierte Licht ist ebenfalls linear polarisiert.

Es zeigte sich, daß für jede flüssigkristalline helikale Substanz ein fester Winkel β zwischen der Polarisationsrichtung des Bestrahlungslichtes zur Herstellung der Komponenten und der Polarisationsrichtung des von den erfindungsgemäßen Komponenten reflektierten Lichtes besteht. β ist für die verschiedenen helikalen Substanzen und auch für verschiedene Präparationen einer Substanz verschieden. β ist jedoch für eine Präparation einer Substanz konstant. Somit läßt sich eine gewünschte Polarisationsrichtung der Reflexionsbanden einfach einstellen. Man bestimmt dazu zunächst durch eine Probebelichtung mit definierter Polarisationsrichtung und Messung der Polarisationsrichtung der Reflexionsbanden bei der gewünschten Wellenlänge den für die Präparation konstanten Winkel β. Anhand dieses Winkels β läßt sich dann die für eine bestimmte erwünschte Polarisationsrichtung des reflektierten Lichtes erforderliche Polarisationsrichtung des Bestrahlungslichtes bestimmen. Durch Bestrahlen einer helikalen flüssigkristallinen Substanz mit linear polarisiertem Licht einer derart ermittelten Polarisationsrichtung läßt sich somit eine optische Komponente mit jeweils erwünschter Polarisationsrichtung der Reflexionsbanden schaffen.

Die Polarisationsrichtung der Reflexionsbanden läßt sich beispielsweise in analoger Weise wie vorgehend beschrieben auch durch die Auswahl des jeweils verwendeten flüssigkristallinen Materials steuern.

Auch die Farbe der Reflexionsbanden läßt sich durch entsprechende Auswahl des jeweils verwendeten flüssigkristallinen Materials steuern.

In einer bevorzugten Ausführungsform des erfindungsgemäßen Verfahrens wird die flüssigkristalline helikale Substanz auf ein Trägersubstrat aufgebracht. Das Trägersubstrat ist in der Regel planar. Die Helixachse der flüssigkristallinen helikalen Substanz steht bevorzugt senkrecht zur Oberfläche des Trägersubstrats. Als Trägersubstrate kommen bespielsweise Papier, Kunststoff, Glas, Quarz oder Metall in Frage. Die auf das Trägersubstrat aufgebrachte flüssigkristalline helikale Substanz kann mit einem weiteren Substrat abgedeckt sein. Das weitere Substrat muß für das Bestrahlungslicht sowie das erfindungsgemäß reflektierte Licht transparent sein.

In einer weiteren Ausführungsform ist es möglich, freitragende Filme einer flüssigkristallinen helikalen Substanz zum Einsatz in dem erfindungsgemäßen Verfahren zu verwenden.

Die erfindungsgemäßen optischen Elemente sind auch durch weitere Verfahren wie z. B. Anlegen elektrischer oder magnetischer Felder herstellbar.

Die Orientierung der erfindungsgemäßen Elemente ist reversibel. Sie läßt sich beispielsweise durch Erwärmen der Probe über die Glastemperatur der eingesetzten flüssigkristallinen helikalen Substanz aufheben. Bevorzugt sollte die Probe dazu auf eine Temperatur, die mehr als 5 K über der entsprechenden Glastemperatur liegt, erwärmt werden.

Eine Anwendung für die erfindungsgemäßen optischen Elemente ist ihre Verwendung als linear polarisierende Reflektoren oder als Polarisatoren.

Weiter lassen sich durch eine Kombination erfindungsgemäßer optischer Elemente mit zueinander geeignet gewählten Polarisationsrichtungen Linienfilter erzeugen. Dazu werden zwei erfindungsgemäße optische Elemente derart aufeinander gelegt, daß das vom ersten Element transmittierte Licht vom zweiten Element reflektiert wird.

Eine weitere wesentliche Anwendung für die erfindungsgemäßen Elemente ist ihr Einsatz als Datenspeicher. Durch Belichtung beispielsweise mittels des erfindungsgemäßen Verfahrens lassen sich Daten z.B. an den belichteten Stellen speichern. Die Daten lassen sich beispielsweise anhand ihrer Reflexion wiedergewinnen. Diese Daten können beispielsweise Pixel für die digitale Speicherung, Bilder oder Buchstaben sein.

Die folgenden Beispiele dienen zur weiteren Erläuterung der Erfindung.

Der in den Beispielen verwendete jeweilige Versuchsaufbau sowie die jeweils erhaltenen Ergebnisse sind in den Abbildungen dargestellt.

Es zeigen

Fig.1: Schematischer Versuchsaufbau für die Durchführung des erfindungsgemäßen Verfahrens, wie in den Beispielen beschrieben.

Fig.2: Reflexion der Probe aus Bsp.1, vor und nach Durchführung des erfindungsgemäßen Verfahrens bzw. nach Durchführung des Verfahrens an einer bestrahlten Stelle, einer unbestrahlten Stelle sowie an einer zu lang bestrahlten Stelle.

Fig.3: Reflexion der Probe aus Bsp.2, vor und nach Durchführung des erfindungsgemäßen Verfahrens bzw. nach Durchführung des Verfahrens an einer bestrahlten und einer unbestrahlten Stelle.

Fig.4: Reflexion der Probe aus Bsp.3, vor und nach Durchführung des erfindungsgemäßen Verfahrens bzw. nach Durchführung des Verfahrens an einer bestrahlten und einer unbestrahlten Stelle.

Fig.5: Schematischer Versuchsaufbau für die Bestrahlung, wie sie in Bsp.4 durchgeführt wurde.

Fig.6: Polarisationsmikroskopische Aufnahme (Auflicht) der Probe aus Bsp.4. a) Die Probe wurde gedreht, bis die sichtbare, grüne Reflexion maximal war; b) Die Probe wurde gegenüber a) um 90° verdreht.

Fig.7: Reflexion der Probe aus Bsp.5, vor und nach Durchführung des erfindungsgemäßen Verfahrens bzw. nach Durchführung des Verfahrens an einer bestrahlten und einer unbestrahlten Stelle.

Fig.8: Absorption einer bestrahlten Probe aus Bsp.5. Der Winkel zwischen der Polarisation des Meßlichtes und der Polarisation des zur Bestrahlung verwendeten Lichtes ist bei den zwei Kurven angegeben.

Fig.9: Schematischer Versuchsaufbau für die Bestimmung von Transmission und Reflexion von linear polarisiertem Licht, wie in Bsp.6 beschrieben.

Fig.10: Reflexion der Probe aus Bsp.6 vor und nach Durchführung des erfindungsgemäßen Verfahrens bzw. nach Durchführung des Verfahrens an einer bestrahlten und einer unbestrahlten Stelle.

Fig.11: Polarisation und Intensität des von einer Probe aus Bsp. 6 reflektierten Lichtes

Fig.12: Schematischer Versuchsaufbau für die Bestimmung der Polarisation von transmittiertem und reflektiertem Licht, wie in Bsp.6 beschrieben.
- Fig. 13:: Absorption der Probe aus Bsp. 7 vor der Bestrahlung für
1) links zirkular polarisiertes Licht
2) rechts zirkular polarisiertes Licht
3) linear polarisiertes Licht, Polarisationswinkel 0°, bezogen auf die spätere Bestrahlungspolarisation
4) linear polarisiertes Licht, Pol.-Winkel um 90° gegenüber 3) verschoben
- Fig. 14:: Absorption der Probe aus Bsp. 7 nach der Bestrahlung für
1) links zirkular polarisiertes Licht
2) rechts zirkular polarisiertes Licht
3) linear polarisiertes Licht, Polarisationswinkel -30°, bezogen auf die Bestrahlungspolarisation
4) linear polarisiertes Licht, Pol.-Winkel 60°, bezogen auf die Bestrahlungspolarisation (90° gegenüber 3) verschoben).

In den Beispielen wurde aus meßtechnischen Gründen bei den polarisationsabhängigen Messungen statt der Reflexion bzw. Transmission der Proben die Absorption der Proben bestimmt. Da die erfindungsgemäßen Proben innerhalb der Reflexionsbanden nicht absorbieren, handelt es sich bei dieser Absorption um eine scheinbare Absorption, die von dem verwendeten Gerät statt der eigentlich gemessenen Transmission angezeigt wurde.

### Beispiele

Für die Verwendung in dem erfindungsgemäßen Verfahren wurden folgende Substanzen nach Vorschrift der DE 3808430 synthetisiert:

### Substanz I:

Zu einer Lösung von 2,0 g 4-(Propen-2-oxy)-benzoesäure-4′-phenylphenylester, 3,33 g 4-(Propen-2-oxy)-benzoesäure-dihydrocholesterylester, 0,86 g 4-(4-Propen-2-oxy)-4′-ethoxy-azobenzol und 0,91 g Tetramethylcyclotetrasiloxan in 18 ml trockenem Toluol wurden 0,07 ml einer 1 Gew.-%igen Lösung von Dicyclopentadien-Platin-dichlorid in Dichlormethan, welche nach literaturbekannten Verfahren, wie beispielsweise J. Chatt, L.M. Vallarino, L.M. Venanzi, J. Chem. Soc. (London) (1957) 2496-505 und H.C. Clark, L.E. Manzer, J. Organometal. Chem. 59 (1973) 411-28, hergestellt wird, zugegeben und die so erhaltene Mischung 4 h lang unter Rückfluß zum Sieden erhitzt.
Zur Abtrennung von platinhaltigen feinen Niederschlägen wurde über eine 5 cm lange, mit Kieselgel oder Tonsil befüllte Säule abfiltriert. Anschließend wurde das Lösungsmittel bei vermindertem Druck (26 mbar) abdestilliert, der Rückstand 2-3 mal aus Tetrahydrofuran mit Ethanol umgefällt und bei vermindertem Druck (26 mbar) bei 100°C getrocknet. Erhalten wurden 3,0 g eines Produktes mit einer Glastemperatur von 54°C, welches bis zum Klärpunkt von 193°C eine helikale Phase besitzt. Das Produkt weist im orientierten Zustand ein Reflexionsmaximum bei 1080 nm auf.

### Substanz II:

Zu einer Lösung von 2,0 g 4-(Propen-2-oxy)-benzoesäure-4′-phenylphenylester, 2,0 g 4-(Propen-2-oxy)-benzoesäure-dihydrocholesterylester, 0,69 g 4-(4-Propen-2-oxy)-4′-ethoxy-azobenzol und 0,73 g Tetramethylcyclotetrasiloxan in 20 ml trockenem Toluol wurden 0,06 ml einer 1 Gew.-%igen Lösung von Dicyclopentadienplatindichlorid in Dichlormethan zugegeben und die so erhaltene Mischung 4 h lang unter Rückfluß erhitzt. Zur Abtrennung von platinhaltigen feinen Niederschlägen wurde über eine kurze, mit Kieselgel oder Tonsil befüllte Säule abfiltriert. Anschließend wurde das Lösungsmittel bei vermindertem Druck abdestilliert, der Rückstand 2-3 mal aus Tetrahydrofuran mit Ethanol umgefällt und bei vermindertem Druck bei 100°C getrocknet. Erhalten wurden 2,4 g eines Produktes mit einer Glastemperatur von 55°C, welches bis zum Klärpunkt von 195°C eine helikale Phase besitzt. Das Produkt weist im orientierten Zustand ein Reflexionsmaximum bei 1550 nm auf.

### Substanz III:

Zu einer Lösung von 5,50 g 4-(Propen-2-oxy)-benzoesäure-4′-phenylphenylester, 4,19 g 4-(Propen-2-oxy)-benzoesäure-dihydrocholesterylester, 2,94 g 4(4-Propen-2-oxy)-4′ethoxy-azobenzol und 2,09 g Tetramethylcyclotetrasiloxan in 35 ml trockenem Toluol wurden 0,15 ml einer 1 Gew.-%igen Lösung von Dicyclopentadienplatindichlorid in Dichlormethan zugegeben und die so erhaltene Mischung 3 h lang unter Rückfluß erhitzt. Zur Abtrennung von platinhaltigen feinen Niederschlägen wurde über eine kurze, mit Kieselgel oder Tonsil befüllte Säule abfiltriert. Anschließend wurde das Lösungsmittel bei vermindertem Druck abdestilliert, der Rückstand 4-5 mal aus Tetrahydrofuran mit Ethanol umgefällt und bei vermindertem Druck bei 100°C getrocknet. Erhalten wurden 5,1 g eines Produktes mit einer Glastemperatur von 43°C, welches bis zum Klärpunkt von 177°C eine helikale Phase besitzt. Das Produkt weist im orientierten Zustand ein Reflexionsmaximum bei 1750 nm auf.

### Substanz IV:

Zu einer Lösung von 3,50 g 4-(Propen-2-oxy)-benzoesäure-4′-phenylester, 5,82 g 4-(Propen-2-oxy)-benzoesäure-dihydrocholesterylester, 2,57 g 4-(4-Propen-2-oxy)-4′-ethoxy-azobenzol und 1,82 g Tetramethylcyclotetrasiloxan in 30 ml trockenem Toluol wurden 0,13 ml einer 1 Gew.-%igen Lösung von Dicyclopentadien-Platindichlorid in Dichlormethan zugegeben und die so erhaltene Mischung 4 h unter Rückfluß erhitzt. Die Aufarbeitung erfolgt analog Substanz I. Erhalten wurden 10,0 g eines Produktes mit einer Glastemperatur von 53°C, welches bis zum Klärpunkt von 189°C eine helikale Phase besitzt. Das Produkt weist im orientierten Zustand ein Reflexionsmaximum bei 1310 nm auf.

### Substanz V:

Zu einer Lösung von 2,0 g 4-(Propen-2-oxy)-benzoesäure-4′-phenylphenylester, 3,40 g 4-(Propen-2-oxy)-benzoesäure-dihydrocholesterylester, 1,50 g 4-(4-Propen-2-oxy)-4′ethoxy-azobenzol und 1,0 g Tetramethylcyclotetrasiloxan in 21 ml trockenem Toluol wurden 0,14 ml einer 1-Gew-%igen Lösung von Dicyclopentadienplatindichlorid in Dichlormethan zugegeben und die so erhaltene Mischung 4 h lang unter Rückfluß erhitzt. Zur Abtrennung von platinhaltigen feinen Niederschlägen wurde über eine kurze, mit Kieselgel oder Tonsil befüllte Säule abfiltriert. Anschließend wurde das Lösungsmittel bei vermindertem Druck abdestilliert, der Rückstand 2-4 mal aus Tetrahydrofuran mit Ethanol umgefällt und bei vermindertem Druck bei 100°C getrocknet. Erhalten wurden 4,2 g eines Produktes mit einer Glastemperatur von 55°C, welches bis zum Klärpunkt von 199°C eine helikale Phase besitzt. Das Produkt weist im orientierten Zustand ein Reflexionsmaximum bei 1250nm auf.

### Beispiel 1

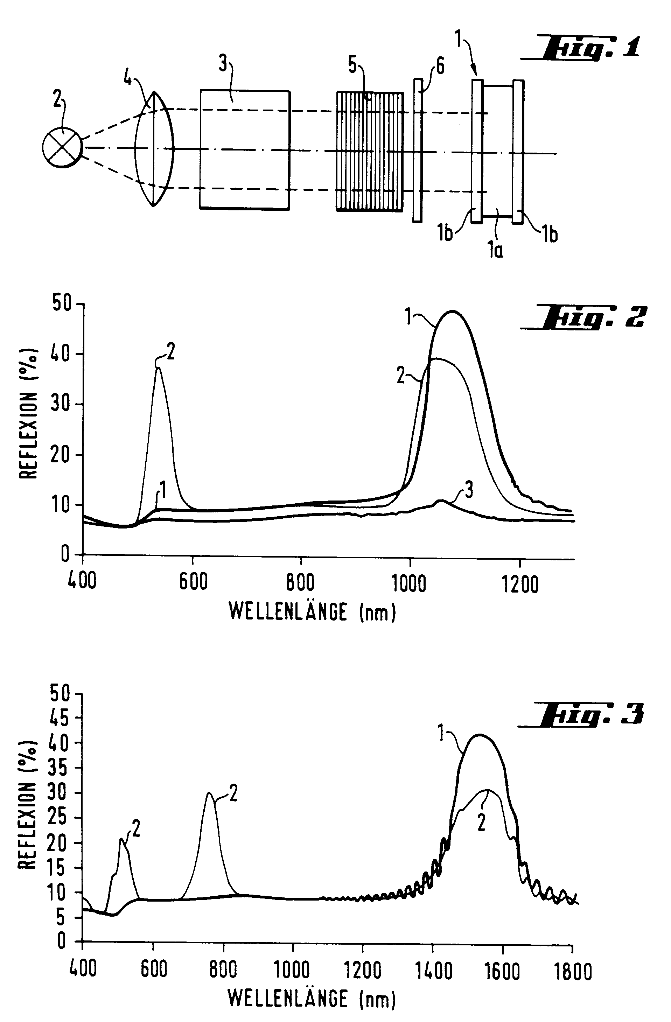

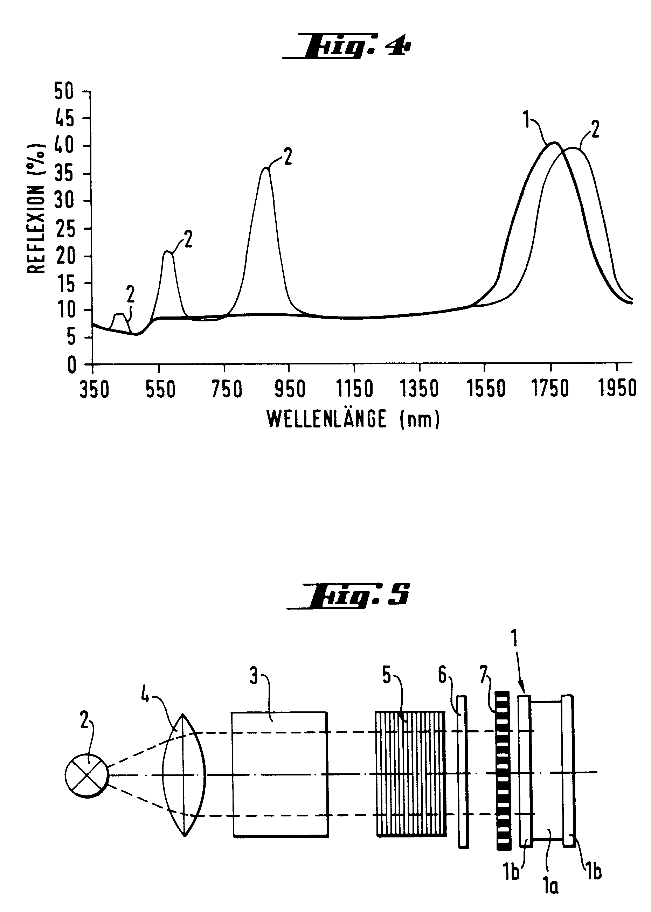

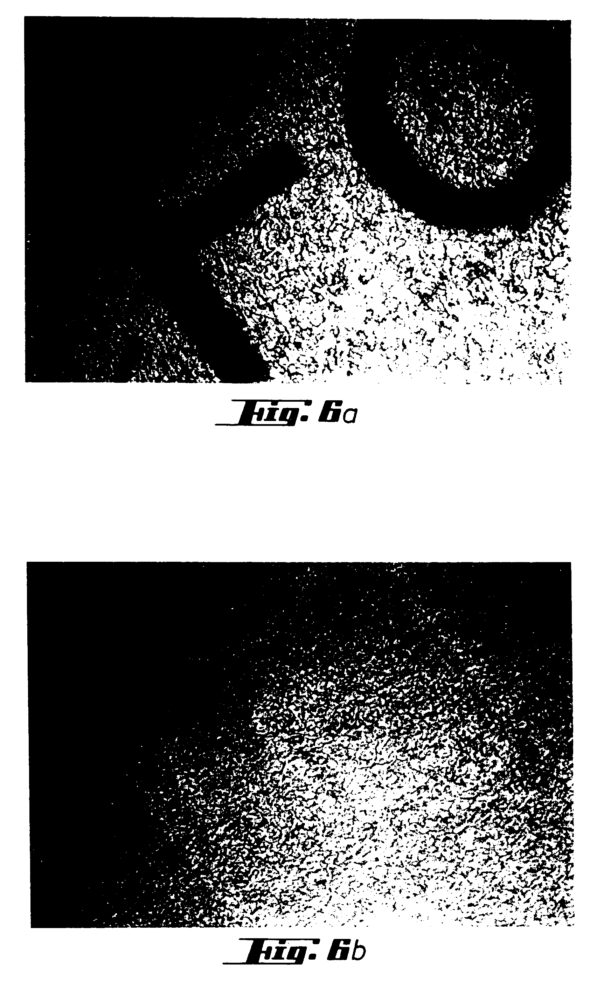

Substanz I (1a in Fig.1) wurde durch Erhitzen auf 140°C und Scheren zwischen zwei mit Polyimid als Orientierungshilfe beschichteten Glasplatten (1b in Fig.1) mit der Helixachse senkrecht zum Substrat (Glas) orientiert. Die Orientierung der Substanz ist am Auftreten der für diese Phase typischen Reflexionsbande bei 1080 nm nach Bestrahlen mit linear polarisiertem Licht zu erkennen (Meßkurve 1 in Fig. 2).
Danach wurde, wie in Fig. 1 schematisch dargestellt, die Probe 1 mit linear polarisiertem Licht einer 200 W Quecksilberhochdrucklampe 2 bestrahlt. Als Wärmestrahlungsfilter diente eine 4 cm lange Wasserküvette (3). Das Licht wurde mit Hilfe eines Quarzkondensors (4) auf die Probe fokussiert. Ein Glasplattenstapel (5) bestehend aus 15 Glasplatten mit je ca. 1mm Dicke, die unter dem Brewsterwinkel in den Strahlengang gestellt wurden und ein Folienpolarisator (6) dienten zur Polarisation des Lichtes. Der Spektralbereich des Lichtes wurde durch das Wasserbad und die verwendeten Optikmaterialien auf 320 bis 920 nm eingeschränkt. Das Licht hatte an der Probenoberfläche eine Leistung von 200 mW/cm². Die Probe wurde 10 min bestrahlt.

Die so bestrahlte Probe zeigte zusätzlich zu der Reflexionsbande der unbestrahlten Probe bei λ_{ref} = 1080 nm eine Bande bei ca. λ_{ref}/2 (siehe Kurve 2 in Fig.2). Bei kürzeren Wellenlängen (< 500 nm) absorbierte die Probe so stark, daß sich kürzerwellige Banden nicht mehr nachweisen ließen. Die Banden wurden durch Transmissions- oder Reflexionsmessungen mit einem UV-VIS-NIR Spektralphotometer Lambda19 (Perkin-Elmer) mit Reflexionszusatz nachgewiesen. Die Reflexion wird dabei unter einem Winkel von 6° zur Probennormalen bestimmt. Betrachtet man die Probe im Polarisationsmikroskop (Aufsicht, Polarisator und Analysator parallel), so wird beim Drehen der belichteten Probe bei einer definierten Stellung das reflektierte Licht bei ca. λ_{ref}/2 (grünes Licht) sichtbar. Verdreht man die Probe um 90°, so verschwindet diese Reflexion. Somit muß das reflektierte Licht linear polarisiert sein.

Bestrahlt man die Probe weiter (4 Stunden), so verschwinden alle Banden (siehe Kurve 3 in Fig.2); die Probe wird in eine quasi nematische Struktur übergeführt.

### Beispiel 2:

Substanz II wurde durch Erhitzen auf 140°C und Scheren zwischen 2 mit Polyimid als Orientierungshilfe beschichteten Glasplatten mit der Helixachse senkrecht zum Substrat (Glas) orientiert. Die Orientierung der Substanz ist am Auftreten der für diese Phase typischen Reflexionsbande bei 1550 nm zu erkennen (siehe Kurve 1 in Fig. 3). Danach wurde die Probe analog Bsp. 1 mit linear polarisiertem Licht bestrahlt (wie in Fig.1 dargestellt: 200 W Quecksilberhochdrucklampe, 4 cm Wasserküvette als Wärmestrahlungsfilter, Quarz-Kondensor, Glasplattenstapel und Folienpolarisator zur Polarisation des Lichtes, Spektralbereich des Lichtes an der Probe 320 nm - 920 nm, Leistung 200 mW/cm² an der Probenoberfläche). Die Bestrahlungszeit betrug 5 Minuten.

Die so bestrahlte Probe zeigt zusätzlich zu der Reflexionsbande bei λ_{ref} = 1550 nm Banden bei 770 nm und bei 514 nm (siehe Kurve 2 in Fig.3). Bei Betrachtung der Probe im Polarisationsmikroskop zeigte sich für die reflektierten Banden der gleiche Effekt wie in Bsp.1 beschrieben. Somit muß das reflektierte Licht linear polarisiert sein.

Bestrahlt man nur Teile der Probe, so zeigen sich in den bestrahlten Bereichen die in Kurve 2 von Fig.3 dargestellten Reflexionsbanden, während im unbestrahlten Teil nur die in Kurve 1 von Fig.3 dargestellte bekannte Reflexionsbande auftritt.

### Beispiel 3:

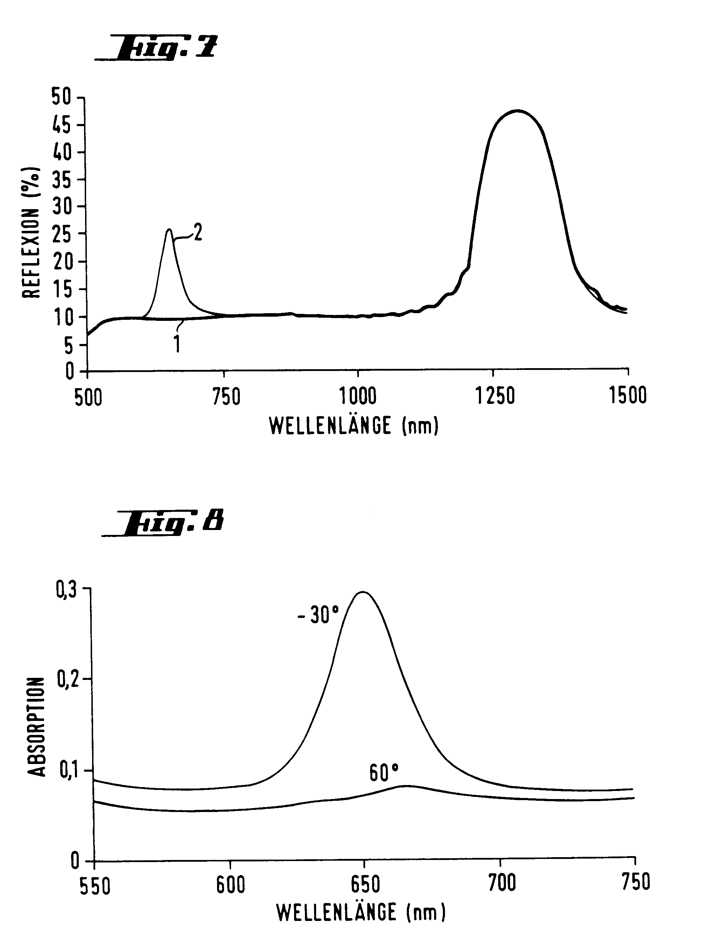

Substanz III wurde durch Erhitzen auf 140°C und Scheren zwischen zwei mit Polyimid als Orientierungshilfe beschichteten Glasplatten mit der Helixachse senkrecht zum Substrat (Glas) orientiert. Die Orientierung der Substanz ist am Auftreten der für diese Phase typischen Reflexionsbande bei 1800 nm zu erkennen (siehe Kurve 1 in Fig. 4). Danach wurde die Probe, wie in Bsp. 1 beschrieben, mit linear polarisiertem Licht bestrahlt (siehe Fig. 1; 200 W Quecksilberhochdrucklampe, 4 cm Wasserküvette als Wärmestrahlungsfilter, Quarz-Kondensor, Glasplattenstapel und Folienpolarisator zur Polarisation des Lichtes, Spektralbereich des Lichtes an der Probe 320 nm - 920 nm, Leistung 100 mW/cm² an der Probenoberfläche). Die Bestrahlungszeit betrug 5 Minuten.

Die durch Bestrahlung hergestellte optische Komponente zeigte zusätzlich zu der Reflexionsbande bei λ_{ref} = 1800 nm Banden bei 870 nm, bei 575 nm und bei 425 nm (siehe Kurve 2 in Fig.4). Bei Betrachtung der Probe im Polarisationsmikroskop zeigt sich für die reflektierten Banden der gleiche Effekt wie in Bsp.1 beschrieben. Somit ist das reflektierte Licht linear polarisiert.

Bestrahlt man nur Teile der Probe, so zeigen sich in den bestrahlten Bereichen die in Kurve 2 von Fig.4 dargestellten Reflexionsbanden, während im unbestrahlten Teil nur die in Kurve 1 von Fig.4 dargestellte bekannte Reflexionsbande auftritt.

### Beispiel 4:

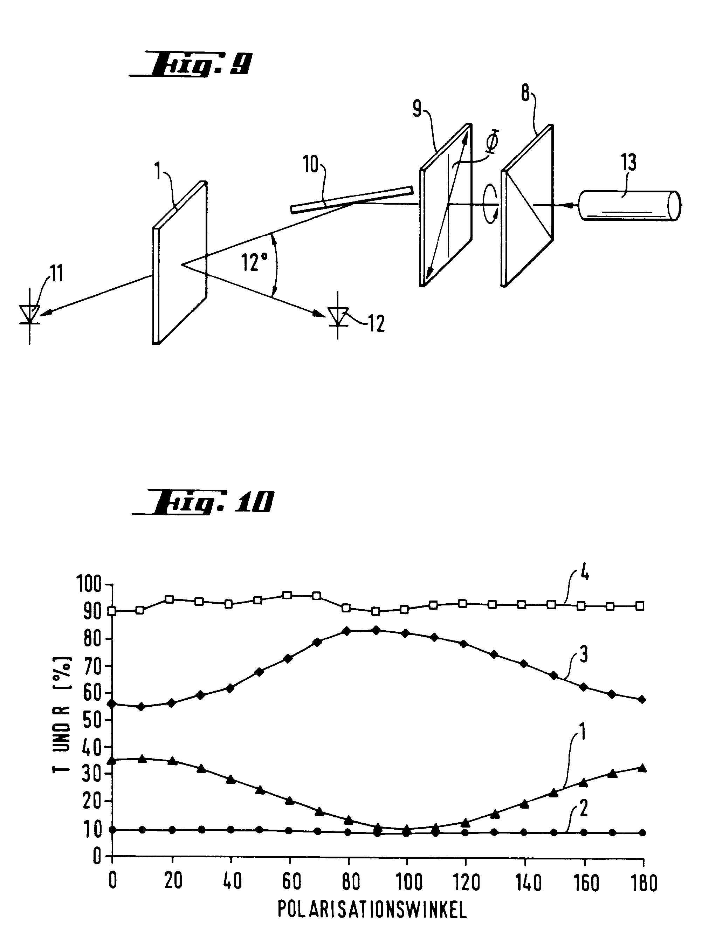

Substanz I wurde durch Erhitzen auf 140°C und Scheren zwischen zwei mit Polyimid als Orientierungshilfe beschichteten Glasplatten mit der Helixachse senkrecht zum Substrat (Glas) orientiert. Die Orientierung der Substanz ist am Auftreten der für diese Phase typischen Reflexionsbande bei 1080 nm zu erkennen (siehe Kurve 1 in Fig. 2). Die Probe wurde durch eine Photomaske hindurch analog wie in Beispiel 1 beschrieben mit linear polarisiertem Licht bestrahlt. Der geänderte Versuchsaufbau ist in Fig.5 dargestellt. Vor der Probe 1 befindet sich die Photomaske 7. Ansonsten ist der Aufbau wie in Fig.1 dargestellt und in Bsp.1 beschrieben.

Die so hergestellte optische Komponente reflektiert, wie in Kurve 2 von Fig.2 gezeigt, grünes Licht (Wellenlänge bei ca. λ_{ref}/2) an den belichteten Stellen. An den unbelichteten Stellen reflektiert die optische Komponente nur die in Kurve 1 von Fig.2 wiedergegebene bekannte Reflexionsbande. Betrachtet man diese Probe im Polarisationsmikroskop (Aufsicht, Polarisator und Analysator parallel), so erscheint beim Drehen der Probe die belichtete Stelle in einer definierten Stellung (Buchstaben "Fo" in Fig.6 oben). Verdreht man die Probe um 90°, so verschwindet diese Reflexion (Fig.6 unten). Somit ist das in den belichteten Bereichen reflektierte Licht linear polarisiert.

### Beispiel 5:

Substanz IV wurde durch Erhitzen auf 140°C und Scheren zwischen 2 mit Polyimid als Orientierungshilfe beschichteten Glasplatten mit der Helixachse senkrecht zum Substrat (Glas) orientiert. Die Orientierung der Substanz ist am Auftreten der für diese Phase typischen Reflexionsbande bei 1310 nm zu erkennen (Kurve 1 in Fig.7). Die Probe wurde wie in Bsp.1 beschrieben mit linear polarisiertem Licht bestrahlt (Fig. 1, 200 W Quecksilberhochdrucklampe, 4 cm Wasserküvette als Wärmestrahlungsfilter, Quarz-Kondensor, Glasplattenstapel und Folienpolarisator zur Polarisation des Lichtes, Spektralbereich des Lichtes an der Probe 320 nm - 920 nm, Leistung 100 mW/cm² an der Probenoberfläche). Die Bestrahlungszeit betrug 10 Minuten.

Die so bestrahlte Probe zeigt zusätzlich zu der Reflexionsbande bei λ_{ref} = 1310 nm eine Bande bei 650 nm (siehe Kurve 2 in Fig.7). Das reflektierte Licht der Wellenlänge 650 nm war linear polarisiert. Dies wurde folgendermaßen bestimmt:

Zusätzlich zur Reflexion wurde die Absorption der Probe in Abhängigkeit von der Polarisationsrichtung des Meßlichts bestimmt. Dazu wurde im Strahlengang des Spektralphotometers ein Linearpolarisator vor die Probe gestellt. Fig. 8 zeigt die Absorption bei zwei um 90° verschiedenen Polarisatorstellungen. Deutlich ist die Polarisationsabhängigkeit der Absorption zu sehen.

### Beispiel 6:

Substanz V wurde analog Beispiel 1 präpariert. Danach wurde die Probe mit linear polarisiertem Licht bestrahlt (analog Beispiel 1, Leistung 100 mW/cm² an der Probenoberfläche, 6 Minuten Bestrahlungszeit). Man erhält durch Bestrahlung zusätzlich zu der Reflexionsbande bei λ_{ref} = 1250 nm eine Bande bei ca. λ_{ref}/2 Die Polarisationsabhängigkeit sowohl dieser Reflexionsbande als auch der Transmission der Probe bei dieser Wellenlänge wurde durch Bestrahlen mit dem Licht eines HeNe-Lasers (633 nm) bestimmt. Der Versuchsaufbau ist in Fig.9 dargestellt: Das linear polarisierte Licht eines HeNe-Lasers (7) wurde mit Hilfe einer Viertel-Wellenplatte (8) zirkular polarisiert und dann mit Hilfe eines Glan-Thomson-Polarisators (9) wieder linear polarisiert. Dadurch wird der Polarisationswinkel φ so variiert, daß man für alle Winkel φ die gleiche Lichtintensität auf der Probe 1 erhält. Dieses Licht wird über einen Spiegel 10 auf die Probe 1 geleitet. Die Transmission wurde durch die Photodiode (11), die Reflexion durch die Photodiode (12) gemessen. Das Ergebnis ist in Fig. 10 dargestellt. Kurve 1 in Fig.10 zeigt, daß hauptsächlich Licht einer Polarisationsrichtung reflektiert wird. Zum Vergleich wurde auch eine unbestrahlte Stelle vermessen. Dort tritt nur die Reflexion an den Glasplatten auf (Kurve 2 in Fig. 10). Kurven 3 und 4 zeigen die Abhängigkeit der Intensität des transmittierten Lichtes von der Polarisationsrichtung des Meßlichtes an einer belichteten (Kurve 3) und an einer unbelichteten Stelle (Kurve 4). Während an der unbelichteten Stelle die Transmission für alle Polarisationen nahezu konstant ist, sieht man bei der belichteten Stelle deutlich die Abnahme der Transmission bei der Polarisatorstellung, bei der die Reflexion hoch ist.

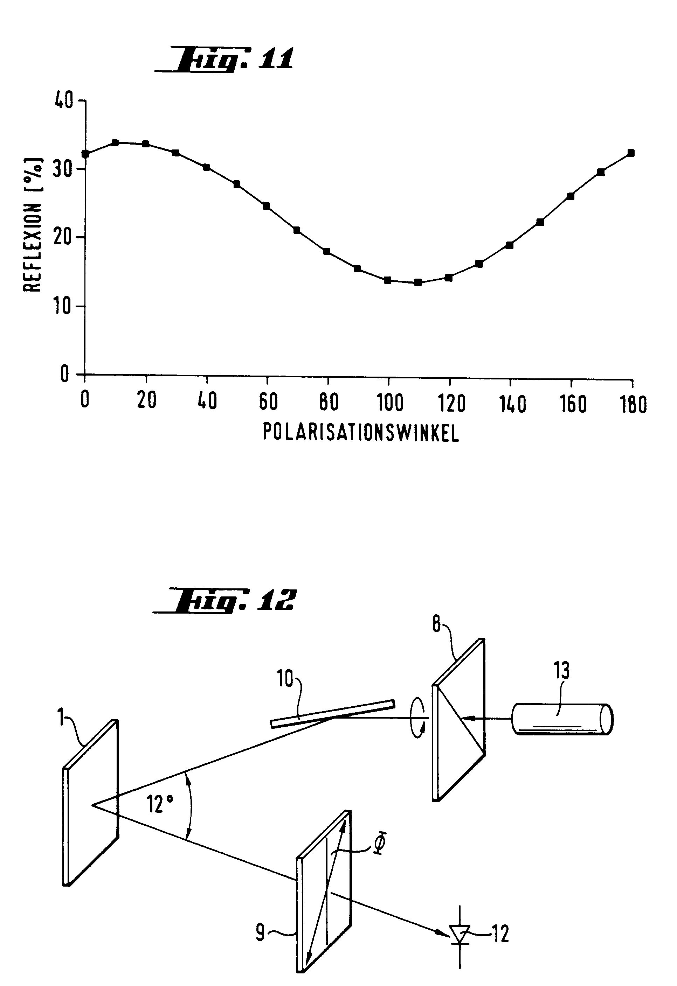

Weitere Messungen (Fig.11) zeigen, daß das reflektierte Licht linear polarisiert ist. Diese Messungen wurden wie in Fig.12 dargestellt, durchgeführt. Das linear polarisierte Licht des HeNe-Lasers 7 wurde mit Hilfe einer Viertel-Wellenplatte 8 zirkular polarisiert. Mit diesem Licht wurde die Probe 1 über einen Spiegel 10 bestrahlt. Die Polarisationsabhängigkeit der Intensität des reflektierten Lichtes wurde mittels des Polarisators 9 und der Photodiode 12 bestimmt. Das Ergebnis ist in Fig. 11 dargestellt.

### Beispiel 7:

Substanz IV wurde durch Erhitzen auf 140°C und Scheren zwischen 2 mit Polyimid als Orientierungshilfe beschichteten Glasplatten mit der Helixachse senkrecht zum Substrat (Glas) orientiert. Die Orientierung der Substanz ist am Auftreten der für diese Phase typischen Reflexionsbande zu erkennen. Danach wurde die Probe mit linear polarisiertem Licht bestrahlt (Fig.1, 200 W Quecksilberhochdrucklampe, 4 cm Wasserküvette als Wärmestrahlungsfilter, Quarz-Kondensor, Glasplattenstapel + Folienpolarisator zur Polarisation des Lichtes, Spektralbereich des Lichtes an der Probe 320 nm - 920 nm, Leistung 100 mW/cm² an der Probenoberfläche, 10 Minuten Bestrahlungszeit).

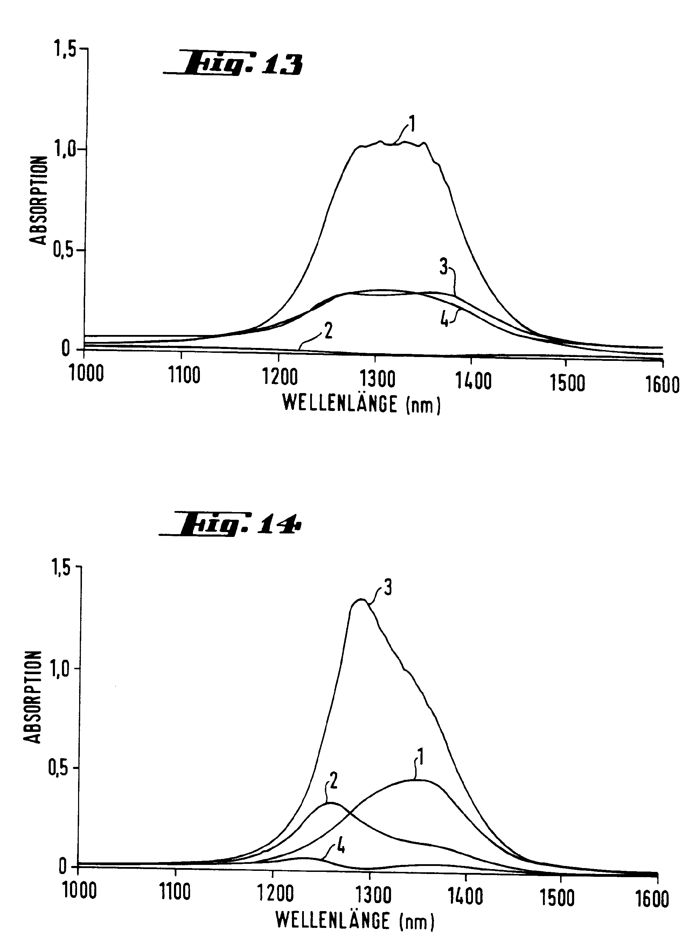

Zusätzlich zur Reflexion wurde die Absorption der Probe in der ursprünglich vorhandenen Reflexionsbande bei 1350 nm in Abhängigkeit vom Polarisationszustand des Meßlichts bestimmt. Dazu wurde im Strahlengang des Spektralphotometers ein Linearpolarisator bzw. Zirkularpolarisator für 1300 nm vor die Probe gestellt. Fig. 13 zeigt die Absorption vor der Bestrahlung für verschiedene Polarisationszustände. Fig. 14 zeigt die Absorption nach der Bestrahlung für verschiedene Polarisationszustände.
Deutlich ist zu erkennen, daß das reflektierte Licht (Reflexion = 1 - Transmission) vor der Bestrahlung links zirkular polarisiert und nach der Bestrahlung linear polarisiert ist.

## Patentansprüche

1. Verfahren zur Herstellung Linear polarisierender optischer Elemente auf der Basis helikaler flüssigkristalliner Substanzen, die mindestens eine photoisomerisierbare Verbindung enthalten, dadurch gekennzeichnet, daß die helikale flüssigkristalline Substanz in einer Schichtdicke von mindestens 2 Pitchlängen orientiert wird und mit linear polarisiertem Licht mit einer Belichtungsenergie/Fläche von 0,5 J/cm² bis 200 J/cm² bestrahlt wird, wobei die Einfallsrichtung des linear polarisierten Lichtes mit der Helixachse der helikalen flüssigkristallinen Substanz einen Winkel zwischen 0 und 30° bildet, so daß die belichtete Substanz in der Lage ist, senkrecht zu ihrer Oberfläche eingestrahltes Licht parallel zur Einfallsrichtung Linear polarisiert zu reflektieren.

2. Verfahren nach Anspruch 1, dadurch gekennzeichnet, daß als flüssigkristalline helikale Substanz flüssigkristalline helikale Organopolysiloxane eingesetzt werden.

3. Verfahren nach Anspruch 1, dadurch gekennzeichnet, daß als flüssigkristalline helikale Substanz flüssigkristalline helikale Organopolysiloxane mit mesogenen Resten in der Seitenkette eingesetzt werden.

4. Verfahren nach Anspruch 1, dadurch gekennzeichnet, daß die Absorptionscharakteristika der photoisomerisierbaren Verbindung und die Wellenlänge des linear polarisierten Lichts derart aufeinander abgestimmt sind, daß das Spektrum des Lichts und die Absorption der photoisomerisierbaren Verbindung überlappen.

5. Verfahren zur Herstellung optischer Elemente auf der Basis helikaler flüssigkristalliner Substanzen, die mindestens eine photoisomerisierbare Verbindung enthalten mit Reflexionsbanden jeweils in gewünschter definierter Richtung Linear polarisierten Lichtes, dadurch gekennzeichnet, daß
a) die helikale flüssigkristalline Substanz in einer Schichtdicke von mindestens 2 Pitchlängen in an sich bekannter Weise orientiert wird,
b) durch eine Probebelichtung mit definierter Polarisationsrichtung und eine Messung der Polarisationsrichtung der Reflexionsbande der Winkel zwischen der Polarisationsrichtung des Bestrahlungslichtes und der Polarisationsrichtung des reflektierten Lichts bestimmt wird,
c) anhand dieses Winkels die für die bestimmte erwünschte Polarisationsrichtung des reflektierten Lichts erforderliche Polarisationsrichtung des Bestrahlunaslichts bestimmt wird und
d) mit linear polarisiertem Licht einer derart ermittelten Polarisationsrichtung mit einer Belichtungsenergie/Fläche von 0,5 J/cm² bis 200 J/cm² bestrahlt wird, so daß die belichtete Substanz in der Lage ist, senkrecht zu deren Oberfläche eingestrahltes Licht parallel zur Einfallsrichtung zu reflektieren.

6. Optische Elemente auf der Basis helikaler flüssigkristalliner Substanzen, die mindestens eine photoisomerisierbare Verbindung enthalten und in der Lage sind, senkrecht zu ihrer Oberfläche eingestrahltes Licht parallel zur Einfallsrichtung Linear polarisiert zu reflektieren, erhältlich, durch ein Verfahren gemäß Anspruch 1.

7. Verwendung der optischen Elemente nach Anspruch 6 als linear polarisierende Polarisatoren.

8. Verwendung der optischen Elemente nach Anspruch 6 als Linienfilter.

9. Verwendung der optischen Elemente nach Anspruch 6 zur Speicherung von Information.

10. Verwendung der optischen Elemente nach Anspruch 6 als Reflektoren.

## Claims

1. Process for the production of linear-polarizing optical elements based on helical liquid-crystalline substances containing at least one photoisomerizable compound, characterized in that the helical liquid-crystalline substance is aligned in a layer thickness of at least 2 pitch lengths and is irradiated with linear-polarized light having an exposure energy/area of from 0.5 J/cm² to 200 J/cm², where the direction of incidence of the linear-polarized light forms an angle with the helix axis of the helical liquid-crystalline substance of between 0 and 30°, so that the exposed substance is capable of reflecting light incidence perpendicular to its surface in a linear-polarized manner parallel to the direction of incidence.

2. Process according to Claim 1, characterized in that the helical liquid-crystalline substance employed is a helical liquid-crystalline organopolysiloxane.

3. Process according to Claim 1, characterized in that the helical liquid-crystalline substance employed is a helical liquid-crystalline organopolysiloxane containing mesogenic radicals in the side chain.

4. Process according to Claim 1, characterized in that the absorption characteristics of the photoisomerizable compound and the wavelength of the linear-polarized light are matched to one another in such a way that the spectrum of the light and the absorption of the photoisomerizable compound overlap.

5. Process for the production of elements based on helical liquid-crystalline substances containing at least one photoisomerizable compound having reflection bands in each case in the desired defined direction of linear-polarized light, characterized in that
a) the helical liquid-crystalline substance is aligned in a manner known per se in a layer thickness of at least 2 pitch lengths,
b) the angle between the polarization direction of the incident light and the polarization direction of the reflected light is determined by a trial exposure of defined polarization direction and measurement of the polarization direction of the reflection band,
c) the polarization direction of the incident light, necessary for the determined desired polarization direction of the reflected light, is determined from this angle, and
d) irradiation is carried out with linear-polarized light of a polarization direction determined in this way with an exposure energy/area of from 0.5 J/cm² to 200 J/cm², so that the exposed substance is capable of reflecting light incident perpendicular to its surface in a linear-polarized manner parallel to the direction of incidence.

6. Optical elements, obtainable by a process according to Claim 1, based on helical liquid-crystalline substances which contain at least one photoisomerizable compound and are capable of reflecting light incident perpendicular to their surface in a linear-polarized manner parallel to the direction of incidence.

7. Use of an optical element according to Claim 6 as a linear-polarizing polarizer.

8. Use of an optical element according to Claim 6 as a line filter.

9. Use of an optical element according to Claim 6 for storing information.

10. Use of an optical element according to Claim 6 as a reflector.

## Revendications

1. Procédé de fabrication d'éléments optiques à polarisation rectiligne, à base de substances à l'état de cristaux liquides à structure en hélice contenant au moins un composé photo-isomérisable, **caractérisé** en ce qu'on oriente la substance cristalline liquide hélicoïdale en épaisseur de couche d'au moins 2 longueurs de pas, et on l'expose à de la lumière rectilignement polarisée présentant un rapport énergie d'exposition / surface de 0,5 J/cm² à 200 J/cm², la direction d'incidence de la lumière rectilignement polarisée formant un angle compris entre 0 et 30° avec l'axe d'hélice de la substance cristalline liquide hélicoïdale, de sorte que la substance exposée à la lumière est à même de réfléchir la lumière, incidente perpendiculairement à sa surface, avec une polarisation rectiligne parallèlement à la direction d'incidence.

2. Procédé selon la revendication 1, **caractérisé** en ce qu'on utilise comme substance cristalline liquide hélicoïdale des organopolysiloxanes à l'état de cristaux liquides à structure en hélice.

3. Procédé selon la revendication 1, **caractérisé** en ce qu'on utilise comme substance cristalline liquide hélicoïdale des organopolysiloxanes à l'état de cristaux liquides à structure en hélice avec des restes mésogènes dans la chaîne latérale.

4. Procédé selon la revendication 1, **caractérisé** en ce que les caractéristiques d'absorption du composé photo-isomérisable et la longueur d'onde de la lumière rectilignement polarisée sont harmonisées de telle sorte que le spectre de la lumière et l'absorption du composé photo-isomérisable se chevauchent.

5. Procédé de fabrication d'éléments optiques à base de substances à l'état de cristaux liquides à structure en hélice contenant au moins un composé photo-isomérisable avec des bandes de réflexion respectives dans la direction définie souhaitée de la lumière rectilignement polarisée, **caractérisé** en ce que
a) on oriente d'une manière en soi connue la substance cristalline liquide hélicoïdale en épaisseur de couche d'au moins 2 longueurs de pas,
b) par une exposition d'essai avec une direction de polarisation définie et une mesure de la direction de polarisation de la bande de réflexion, on détermine l'angle entre la direction de polarisation de la lumière d'exposition et la direction de polarisation de la lumière réfléchie,
c) à l'aide de cet angle, on détermine la direction de polarisation de la lumière d'exposition qui est nécessaire pour obtenir la direction de polarisation définie souhaitée de la lumière réfléchie,
d) on effectue l'exposition avec de la lumière rectilignement polarisée présentant une direction de polarisation ainsi déterminée et un rapport énergie d'exposition / surface de 0,5 J/cm² à 200 J/cm², de sorte que la substance exposée à la lumière est à même de réfléchir la lumière, incidente perpendiculairement à sa surface, parallèlement à la direction d'incidence.

6. Eléments optiques à base de substances à l'état de cristaux liquides à structure en hélice, contenant au moins un composé photo-isomérisable et à même de réfléchir la lumière, incidente perpendiculairement à leur surface, avec une polarisation rectiligne parallèlement à la direction d'incidence, ces éléments optiques pouvant être obtenus au moyen d'un procédé selon la revendication 1.

7. Utilisation des éléments optiques selon la revendication 6 comme polariseurs à polarisation rectiligne.

8. Utilisation des éléments optiques selon la revendication 6 comme filtres linéaires.

9. Utilisation des éléments optiques selon la revendication 6 pour le stockage d'informations.

10. Utilisation des éléments optiques selon la revendication 6 comme réflecteurs.
